# FASCICULE DE BREVET EUROPEEN

(11) **EP 1 873 848 B1**
(45) Date de publication et mention de la délivrance du brevet: **07.10.2009**
(21) Numéro de dépôt: 07354034.6
(22) Date de dépôt: 07.06.2007
(51) Int. Cl.: H01M 4/62, H01M 4/48, H01M 4/02, H01M 10/40

(54) **Dispersion aqueuse à base d'amidon et d'oxyde mixte de lithium et de titane, pour une électrode d'accumulateur au lithium**
Wässrige Dispersion auf Basis von Stärke und gemischtem Lithium- und Titanoxid für eine Elektrode eines Lithiumakkus
Aqueous dispersion based on starch and mixed lithium and titanium oxide, for a lithium accumulator electrode

(30) Priorité: 26.06.2006 FR 0605709
(43) Date de publication de la demande: 02.01.2008
(73) Titulaire: Commissariat à l'Energie Atomique, 75015 Paris (FR)
(72) Inventeur: Jouanneau-si Larbi, Séverine, F-38590 Sillans (FR); Yildirim, Gunay, 38400 Saint Martin d'Heres (FR)
(74) Mandataire: Jouvray, Marie-Andrée

(56) Documents cités:
- EP-A- 1 221 730
- EP-A- 1 655 798
- US-A- 3 877 983
- US-B1- 6 475 673

## Description

### Domaine technique de l'invention

L'invention concerne une dispersion pour électrode d'accumulateur au lithium comportant au moins un solvant aqueux, un oxyde mixte de lithium et de titane et un liant organique.

L'invention concerne également l'utilisation de la dispersion dans un procédé de fabrication d'une électrode d'un accumulateur au lithium.

### État de la technique

Les accumulateurs au lithium sont de plus en plus utilisés comme sources d'énergie autonomes. Plus particulièrement, ils tendent à remplacer progressivement les accumulateurs de type nickel-cadmium (NiCd) et de type nickel-hydrure métallique (NiMH) dans les équipements portables. Ceci est en partie dû à leur densité d'énergie largement supérieure à celle des accumulateurs NiCd et NiMH.

Les matériaux actifs utilisés pour former l'électrode positive d'un accumulateur au lithium sont principalement LiCoO₂, LiNiO₂, les oxydes mixtes Li(Ni, Co, Mn, Al)O₂, LiMn₂O₄ ou des composés de structure spinelle de composition proche de LiMn₂O₄ ou de structure olivine de type LiFePO₄.

Pour l'électrode négative, les principaux matériaux utilisés sont le lithium métallique, un alliage à base de lithium, une nanodispersion d'un alliage de lithium dans un oxyde de lithium et de métal de transition et un oxyde mixte de lithium et de titane de type LiₓTi_{y}O₄, avec 0,8≤x≤1,4 et 1,6≤y≤2,2.

Parmi les oxydes mixtes de lithium et de titane précités, l'oxyde de titane et de lithium Li₄Ti₅O₁₂, également appelé titanate de lithium, est actuellement considéré comme un matériau très prometteur pour former un matériau actif d'électrode négative, notamment pour des applications demandant de fortes puissances. En effet, il possède une forte capacité d'intercalation du lithium puisqu'il est capable d'insérer 3 cations Li⁺ par unité. De plus, il possède une bonne tenue en cyclage. Enfin, il peut être chargé et déchargé rapidement à fort courant, notamment parce qu'il présente un potentiel de fonctionnement (1,5 V par rapport au potentiel du couple Li⁺/Li) favorisant son utilisation avec tout type d'électrolyte liquide.

Par ailleurs, les électrodes d'un accumulateur au lithium sont en général réalisées en ajoutant, au matériau actif, un élément conducteur électroniquement tel que du carbone et un liant organique tel que le polyfluorure de vinylidène (PVDF), le copolymère de polyfluorure de vinylidène et de hexafluoropropylène (PVDF-HFP) ou le polyoxyde d'éthylène (POE). Ces différents éléments sont, généralement, mis en suspension dans un solvant organique tel que la N-méthyl-pyrrolidone ou l'acrylonitrile. Ces solvants sont, cependant, très toxiques et relativement coûteux. De plus, de tels solvants organiques étant nocifs pour l'environnement, la fabrication d'électrodes à grande échelle nécessite la mise en place de procédés élaborés et coûteux pour évacuer les solvants organiques.

Pour fabriquer une électrode d'accumulateur au lithium à base d'oxyde mixte de lithium et de titane de formule générale LiₓTi_{y}O₄, avec 0,8≤x≤1,4 et 1,6≤y≤2,2, la demande de brevet EP-A-1221730 propose d'utiliser un liant organique compatible avec des solvants aqueux. Plus particulièrement, le liant organique est un polymère non-fluoré, soluble dans l'eau ou formant une émulsion stable lorsqu'il est mis en suspension dans l'eau. Le liant contient, de préférence, un élastomère tel qu'un copolymère styrène/butadiène (SBR) et/ou un composé cellulosique tel qu'un carboxyméthylcellulose (CMC) de poids moléculaire moyen supérieur à 200000. Un tel liant n'est, cependant, pas entièrement satisfaisant.

Plus particulièrement, l'utilisation de CMC peut induire une baisse des performances du matériau actif de l'électrode. Pour les électrodes à fort grammage, elle peut également entraîner un phénomène de retrait important lors du séchage de la suspension et donc lors de l'évaporation de l'eau. Le CMC est, en effet, un polymère hydrosoluble semi-synthétique, dérivant de la cellulose. Il est formé de plusieurs centaines d'unités de glucose sur lesquelles sont substitués des groupements -CH₂COOH. Or, les très longues chaînes polymériques du CMC présentent l'inconvénient d'être très couvrantes. Elles mouillent, ainsi, complètement les grains de matériau actif, ce qui induit la baisse des performances dudit matériau et le phénomène de retrait lors du séchage. De plus, le CMC mis en solution comporte de nombreuses terminaisons -OH, O⁻ ainsi que -OH⁻. La terminaison -OH⁻ peut former, avec le fluor présent dans le sel de l'électrolyte, de l'acide fluorhydrique (HF) ou de l'hydroxyde de lithium ou de sodium, avec le lithium ou le sodium présent dans le sel de l'électrolyte.

Le SBR est un polymère plastifiant. Utilisé seul, le carbone a du mal à se disperser de façon homogène dans la solution. De plus, le SBR ne présente pas de fonction épaississante. Le liant obtenu est alors trop liquide et l'enduction de l'électrode est difficile à maîtriser.

### Objet de l'invention

L'invention a pour but une dispersion pour électrode d'accumulateur au lithium remédiant aux inconvénients de l'art antérieur. Plus particulièrement, elle a pour but une dispersion permettant d'obtenir une électrode d'accumulateur au lithium homogène, performante électrochimiquement et présentant de bonnes propriétés mécaniques tout en préservant l'environnement.

Selon l'invention, ce but est atteint par les revendications annexées.

### Description de modes particuliers de réalisation

Une électrode d'accumulateur au lithium est réalisée à partir d'une dispersion comportant au moins un solvant aqueux tel que l'eau, un oxyde mixte de lithium et de titane et un liant organique.

L'oxyde mixte de lithium et de titane est de type LiₓTi_{y}O₄ avec 0,8≤x≤1,4 et 1,6≤y≤2,2. Plus particulièrement, l'oxyde mixte de lithium et de titane est Li₄Ti₅O₁₂ ou un dérivé de Li₄Ti₅O₁₂ tel que les composés choisis parmi Li₄₋ₓ,Mₓ,Ti₅O₁₂ et Li₄Ti_{5-y'}N_{y'}O₁₂ avec x' et y' compris entre 0 et 0,2 et M et N étant respectivement des éléments chimiques choisis parmi Na, K, Mg, Nb, Al, Ni, Co, Zr, Cr, Mn, Fe, Cu, Zn, Si et Mo. La proportion en poids d'oxyde mixte de lithium et de titane dans la dispersion est, de préférence, comprise entre 80% et 98%.

Le liant organique comporte un polysaccharide de type amidon. Plus particulièrement, la proportion en poids de polysaccharide de type amidon dans la dispersion est comprise entre 0,1% et 5% et plus particulièrement entre 0,2% et 5%.

De manière générale, l'amidon est un polysaccharide de réserve ayant la formule chimique générale (C₆H₁₀O₅)ₙ et présentant la particularité de comporter deux fractions polysaccharidiques distinctes : l'amylose et l'amylopectine. L'amylose est une molécule linéaire formée d'environ 600 molécules de glucose liées par une liaison a-(1,4)-D-glucosidique et l'amylopectine diffère de l'amylose par le fait qu'elle est plus ramifiée.

Le polysaccharide de type amidon utilisé dans la dispersion est ainsi choisi de manière à ce que le rapport R entre la proportion en poids d'amylose et la proportion en poids d'amylopectine soit inférieur ou égal à 25%. Ceci permet d'obtenir une dispersion homogène, c'est-à-dire une dispersion présentant une répartition homogène des particules mises en présence, et plus particulièrement une émulsion. En effet, lors de la mise en solution aqueuse, les deux fractions polysaccharidiques se dissocient. Seule l'amylopectine est stable en émulsion dans l'eau et une trop forte proportion d'amylose peut conduire à un risque de synérèse, c'est-à-dire à une dispersion non homogène. Dans ce cas, l'électrode réalisée à partir de cette dispersion non homogène serait elle-même non homogène car le phénomène de synérèse augmente avec le séchage et l'évaporation de l'eau.

La dispersion peut être chauffée légèrement, par exemple entre 60°C et 80°C, ce qui permet de conserver une dispersion stable et homogène pendant plusieurs jours après refroidissement. Le polysaccharide de type amidon utilisé peut également être un amidon modifié, par exemple un gel, soluble dans l'eau.

Le fait de choisir un polysaccharide de type amidon permet d'utiliser un solvant aqueux tel que l'eau, ce qui est favorable à la protection de l'environnement. De plus cela permet de remédier aux inconvénients du liant organique décrit dans la demande de brevet EP-1221730 et notamment en évitant une baisse des performances et un retrait lors du séchage. En effet, un polysaccharide de type amidon présente, moins de terminaison OH⁻ et les chaînes sont plus courtes que pour le CMC.

Le liant peut également comporter un composé additionnel présentant au moins la fonction de plastifiant. Il est, par exemple, choisi parmi les composés élastomères et les composés polyélectrolytes. Le composé additionnel est, par exemple, un copolymère styrène/butadiène (SBR), un polyacétate de vinyle (PVA), un polyvinyl-pyrrolidone (PVP), un polyoxyde d'éthylène (POE). La proportion en poids du composé additionnel, dans la dispersion, est, plus particulièrement inférieure ou égale à 7% et plus particulièrement inférieure ou égale à 4%.

La dispersion peut également comporter un composé conducteur électroniquement tel que du carbone de type graphite ou coke. La proportion en poids du composé conducteur électroniquement dans la dispersion est, de préférence, comprise entre 0,5% et 10% en poids.

A titre d'exemple, une dispersion est préparée en mélangeant 90% de titanate de lithium Li₄Ti₅O₁₂, 4% d'un polysaccharide de type amidon présentant un rapport R = 0,20 et de l'eau. 5% de noir de carbone conducteur électroniquement est, ensuite rajouté au mélange obtenu préalablement et le tout est mélangé pendant 5 minutes. La viscosité du mélange peut être ajustée en rajoutant de l'eau, dans une proportion de 45% d'extrait sec. Un composé additionnel hydrosoluble tel que le PVA est ensuite ajouté au mélange, dans une proportion de 1%, de manière à obtenir une encre. L'encre ainsi obtenue peut être enduite sur un collecteur de courant en aluminium, avec une racle à vis micrométrique. Après une étape de séchage à l'air ambiant pendant 15 minutes, au cours de laquelle l'amidon est dissocié en ses deux fonctions polysaccharidiques, et une mise en étuve à 55°C pendant 24 heures, le collecteur de courant enduit par ladite encre forme une électrode apte à être utilisée dans un accumulateur au lithium.

Un accumulateur au lithium de type Li-Métal est, par exemple, réalisé en utilisant, comme électrode positive, l'électrode fabriquée ci-dessus, une électrode négative en lithium métallique et un séparateur imbibé d'électrolyte liquide formé par LiPF₆ (1M) en solution dans du carbonate de propylène. A 25°C, un tel accumulateur permet l'échange de 3 cations Li⁺, avec une tension de fonctionnement sensiblement constante et égale à 1,55 V par rapport au couple Li⁺/Li. La capacité spécifique obtenue est de 160 mAh/g en régime C/10. La dispersion réalisée ci-dessus permet, ainsi, d'obtenir une électrode homogène, performante électrochimiquement et présentant de bonnes propriétés mécaniques.

De même, un accumulateur au lithium de type Li-lon peut être réalisé en utilisant l'électrode fabriquée ci-dessus comme électrode négative, une électrode positive à base de LiFePO₄ et un séparateur imbibé d'électrolyte liquide formé par LiPF₆ (1M) en solution dans du carbonate de propylène. Les électrodes sont positionnées de manière à avoir 3 moles de LiFePO₄ pour une mole de Li₄Ti₅O₁₂, ce qui permet d'utiliser 100% de la capacité de stockage du matériau actif de l'électrode négative. Un tel accumulateur fonctionne à une tension de 1,9V.

L'électrolyte peut être tout type de sel comportant un cation Li⁺ et mis en solution dans un solvant aprotique. A titre d'exemple, le sel peut être LiClO₄, LiAsF₆, LiPF₆, LiBF₄, LiCH₃SO₃ et le solvant aprotique peut être de l'éthylène carbonate, du propylène carbonate, du diméthylcarbonate, du diéthylcarbonate, du méthylcarbonate.

L'invention n'est pas limitée aux modes de réalisation décrits ci-dessus. A titre d'exemple, pour former une électrode, une dispersion selon l'invention peut être étalée, imprimée ou enduite sur un collecteur de courant. Un accumulateur Li/lon comportant une électrode négative réalisée à partir d'une dispersion selon l'invention peut comporter tout type de matériau d'électrode positive connu. A titre d'exemple, le matériau d'électrode positive peut être LiFePO₄ ou LiMn₂O₄ ou LiNi_{0,5}Mn_{1,5}O₄.

## Revendications

1. Dispersion pour électrode d'accumulateur au lithium comportant au moins un solvant aqueux, un oxyde mixte de lithium et de titane et un liant organique, **caractérisée en ce que** le liant organique comporte un polysaccharide de type amidon, comprenant de l'amylose et de l'amylopectine, le rapport entre la proportion en poids d'amylose et la proportion en poids d'amylopectine étant inférieur ou égal à 25%.

2. Dispersion selon la revendication 1**, caractérisée en ce que** la proportion en poids de polysaccharide de type amidon dans la dispersion est comprise entre 0, 1 % et 5% en poids.

3. Dispersion selon l'une des revendications 1 et 2, **caractérisée en ce que** la proportion en poids d'oxyde mixte de lithium et de titane dans la dispersion est comprise entre 80% et 98% en poids.

4. Dispersion selon l'une quelconque des revendications 1 à 3, **caractérisée en ce qu'**elle comporte un composé conducteur électroniquement.

5. Dispersion selon la revendication 4, **caractérisée en ce que** la proportion en poids du composé conducteur électroniquement dans la dispersion est comprise entre 0,5 et 10%.

6. Dispersion selon l'une quelconque des revendications 1 à 5, **caractérisée en ce que** le liant organique comporte au moins un composé additionnel choisi parmi les composés élastomères et les composés polyélectrolytes.

7. Dispersion selon la revendication 6, **caractérisée en ce que** le composé additionnel est choisi parmi un copolymère styrène/butadiène, un polyacétate de vinyle, un polyvinyl pyrrolidone, un polyoxyde d'éthylène.

8. Dispersion selon la revendication 7, **caractérisée en ce que** la proportion en poids du composé additionnel dans la dispersion est inférieure ou égale à 7%.

9. Utilisation de la dispersion selon l'une quelconque des revendications 1 à 8 dans un procédé de fabrication d'une électrode d'un accumulateur au lithium.

## Claims

1. Dispersion for a lithium storage battery electrode comprising at least an aqueous solvent, a lithium and titanium mixed oxide and an organic binder, **characterized in that** the organic binder comprises a starch-type polysaccharide comprising amylose and amylopectin, the ratio between the weight proportion of amylose and the weight proportion of amylopectin being less than or equal to 25%.

2. Dispersion according to claim 1, **characterized in that** the weight proportion of starch-type polysaccharide in the dispersion is comprised between 0.1 % and 5% in weight.

3. Dispersion according to one of the claims 1 and 2, **characterized in that** the weight proportion of lithium and titanium mixed oxide in the dispersion is comprised between 80% and 98% in weight.

4. Dispersion according to any one of the claims 1 to 3, **characterized in that** it comprises an electronically conducting compound.

5. Dispersion according to claim 4, **characterized in that** the weight proportion of the electronically conducting compound in the dispersion is comprised between 0.5 and 10%.

6. Dispersion according to any one of the claims 1 to 5, **characterized in that** the organic binder comprises at least one additional compound selected among elastomer compounds and polyelectrolyte compounds.

7. Dispersion according to claim 6, **characterized in that** the additional compound is selected among a styrene/butadiene copolymer, a polyvinyl acetate, a polyvinyl pyrrolidone and a polyethylene oxide.

8. Dispersion according to claim 7, **characterized in that** the weight proportion of the additional compound in the dispersion is less than or equal to 7%.

9. Use of the dispersion according to any one of the claims 1 to 8 in a method for producing a lithium storage battery electrode.

## Patentansprüche

1. Dispersion für eine Elektrode eines Lithiumakkumulators, die mindestens ein wässriges Lösungsmittel, ein Lithium-Titan-Mischoxid und ein organisches Bindemittel umfasst, **dadurch gekennzeichnet, dass** das organische Bindemittel ein Polysaccharid vom Stärke Typ umfasst, das Amylose und Amylopektin enthält, wobei das Verhältnis zwischen dem Gewichtsanteil von Amylose und dem Gewichtsanteil von Amylopektin unter oder gleich 25 % ist.

2. Dispersion nach Anspruch 1, **dadurch gekennzeichnet, dass** der Gewichtsanteil des Stärke-Typ Polysaccharids in der Dispersion 0,1 bis 5 Gew.-% beträgt.

3. Dispersion nach einem der Ansprüche 1 und 2, **dadurch gekennzeichnet, dass** der Gewichtsanteil des Lithium-Titan-Mischoxids in der Dispersion 80 bis 98 Gew.-% beträgt.

4. Dispersion nach einem der Ansprüche 1 bis 3, **dadurch gekennzeichnet, dass** sie eine elektronisch leitende Verbindung umfasst.

5. Dispersion nach Anspruch 4, **dadurch gekennzeichnet, dass** der Gewichtsanteil der elektronisch leitenden Verbindung in der Dispersion 0,5 bis 10 Gew.-% beträgt.

6. Dispersion nach einem der Ansprüche 1 bis 5**, dadurch gekennzeichnet, dass** das organische Bindemittel mindestens eine zusätzliche Verbindung enthält, die aus den Elastomer-Verbindungen und den Polyelektrolyt-Verbindungen ausgewählt ist.

7. Dispersion nach Anspruch 6, **dadurch gekennzeichnet, dass** die zusätzliche Verbindung ausgewählt ist aus einem Styrol-/Butadien-Kopolymer, einem Vinylpolyacetat, einem Polyvinylpyrrolidon, einem Ethylenpolyoxid.

8. Dispersion nach Anspruch 7, **dadurch gekennzeichnet, dass** der Gewichtsanteil der zusätzlichen Verbindung in der Dispersion kleiner oder gleich 7 Gew.-% ist.

9. Verwendung der Dispersion nach einem der Ansprüche 1 bis 8 bei einem Herstellungsverfahren für eine Elektrode eines Lithiumakkumulators.
